# EUROPÄISCHE PATENTSCHRIFT

(11) **EP 2 078 675 B1**
(45) Veröffentlichungstag und Bekanntmachung des Hinweises auf die Patenterteilung: **09.03.2011**
(21) Anmeldenummer: 08000373.4
(22) Anmeldetag: 10.01.2008
(51) Int. Cl.: B65B 1/28, B65G 69/18

(54) **Andockeinrichtung**
Docking device
Dispositif d'amarrage

(43) Veröffentlichungstag der Anmeldung: 15.07.2009
(73) Patentinhaber: INDAG Gesellschaft für Industriebedarf mbH & Co. Betriebs KG, 69214 Eppelheim (DE)
(72) Erfinder: Wild, Hans-Peter, Dr., 69214 Eppelheim (DE); Tilz, Wolfgang, 68723 Schwetzingen (DE)
(74) Vertreter: Grünecker, Kinkeldey, Stockmair & Schwanhäusser Anwaltssozietät

(56) Entgegenhaltungen:
- WO-A-97/08080
- WO-A-2004/103816
- WO-A-2006/117224
- DE-A1- 10 031 615

## Beschreibung

Die Erfindung bezieht sich auf eine Anordnung mit einer Andockeinrichtung und einem Beutels zum Verbinden Beutels, mit einer Befüll- und/oder Entleerungseinrichtung.

In der Getränke- und Verpackungsindustrie, bei der Probennahme und bei vielen anderen Einsatzzwecken müssen Behälter bzw. Beutel über eine Befüll- und/oder Entleerungseinrichtung befüllt werden. Neben der Direktbefüllung über eine offene Seitenwand des Beutels, finden Beutel mit verschließbaren Befüllöffnungen über einen Spund bzw. Stutzen immer größere Verbreitung. Das Andocken der Behälter an die Befüll- und/oder Entleerungseinrichtung erfordert jedoch eine exakte Ausrichtung der beiden Spunde bzw. Stutzen relativ zueinander. Darüber hinaus steht insbesondere beim automatischen Befüllen- und/oder Entleeren nur sehr wenig Zeit zum Ausrichten zur Verfügung.

Die DE-A-100 31 615 zeigt eine Vorrichtung zum Koppeln von Behältern und/oder Leitungen, die Verschlussteller im Verbindungsbereich einsetzen, wobei ein Zwischenraum zwischen den beiden Verschlusstellern unter Vakuum gesetzt wird. Die Dichtflächen sind eben und zylindrisch.

Der Erfindung liegt somit die Aufgabe zugrunde, eine Andockeinrichtung bereitzustellen, mit der die Stutzen eines Behälters und einer Befüll- und/oder Entleerungseinrichtung auf einfache Weise, exakt und schnell aneinander angedockt werden können.

Die Aufgabe wird durch die Merkmale des Anspruchs 1 gelöst.

Der Beutel ist mit einem Stopfen versehen, mit dem der Behälterstutzen verschlossen werden kann. Erfingdungsgemäß enthält der Stopfen wenigstens ein angeformtes Dichtelement, das die Behälteröffnung abdichtet. Bevorzugt ist wenigstens ein weiteres Dichtelement in der Innenöffnung des Behälterstutzens vorgesehen.

Durch die Passelemente wird eine Selbstzentrierung der Stutzen oder Spunde von Behälter und Befüll- und/oder Entleerungseinrichtung erreicht, die bei Abweichungen dafür sorgt, dass die beiden Stutzen oder Spunde trotzdem noch in einer korrekten Ausrichtung zueinander gelangen. Auf diese Weise ist eine sehr schnelle und vor allen Dingen automatisierte Andockung von Behältern an die Befüll- und/oder Entleerungseinrichtung möglich.

Obwohl die Passelemente beispielsweise auch als korrespondierende Kegelflächen ausgebildet sein können, sind gerundete Anlageflächen, die im Wesentlichen in Axialrichtung weisen, für die vorliegende Erfindung bevorzugt, da bei gerundeten Anlageflächen nicht die Gefahr besteht, dass die Passelemente beim versehentlichen Aufbringen einer größeren Kraft gegeneinander verpresst werden.

Die Anlageflächen enthalten bevorzugt jeweils einen Kreisabschnitt um einen Krümmungsmittelpunkt, der so angeordnet ist, dass die Anlagefläche schräg zur Achse des Stutzens verläuft

Sowohl das Andocken als auch die Reinigung und ggf. Sterilisierung wird erleichtert, wenn sich die Passelemente außerhalb der Innenöffnung befinden und bevorzugt von der Innenöffnung durch eine Dichteinrichtung getrennt sind.

Zum Befestigen der beiden Stutzen aneinander ist bevorzugt eine Verbindungseinrichtung vorgesehen, die gleichzeitig die Passelemente gegeneinander presst. Diese Verbindungseinrichtung enthält bevorzugt eine Klemmeinrichtung zum klemmenden Befestigen der beiden Stutzen aneinander.

Geschieht dies über jeweils einen Stegabschnitt an beiden Stutzen, so ist die Grenzfläche zwischen beiden Stegabschnitten nicht geradlinig und enthält bevorzugt die Passelemente, so dass gleichzeitig eine Art Labyrinthverbindung zur verbesserten Abdichtung entsteht.

Ein Ausführungsbeispiel der Erfindung wird nachfolgend anhand der Zeichnungen näher erläutert. Es zeigen:
- Fig. 1: eine schematische, geschnittene Darstellung einer An- dockeinrichtung, die nicht Teil der Erfindung ist,
- Fig. 2: die herausvergrößerte Andockeinrichtung nach Fig. 1,
- Fig. 3: einer der Stutzen der Andockeinrichtung nach Fig.1. im Schnitt,
- Fig. 4: Detail "A" aus Fig. 3,
- Fig. 5: eine Teildarstellung des anderen Stutzens der Andock- einrichtung nach Fig.1.
- Fig. 6: Detail "B" aus Fig. 5,
- Fig. 7: eine Draufsicht auf die Verbindungseinrichtung der An- dockeinrichtung nach Fig.1.
- Fig. 8: den Schnitt VIII - VIII aus Fig. 7, Fig. 9 einen Schnitt durch einen Stopfen einer erfindungsgemäßen Andockeinrichtung und
- Fig. 10: einen Schnitt durch einen an den Stopfen aus Fig. 9 angepassten Stutzen.

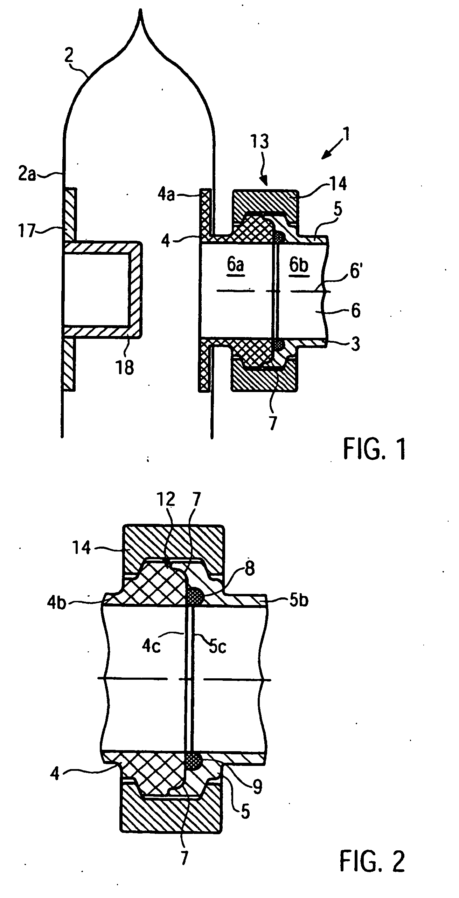

In Fig. 1 ist in stark schematischer und geschnittener Darstellung eine Andockeinrichtung 1 ersichtlich, die einen Behälter 2, dargestellt ist ein Beutel, mit einer Befüll- und/oder Entleerungseinrichtung 3 lösbar verbinden kann. Der Behälter 2 kann jede geeignete und handelsübliche Form aufweisen, ist jedoch bevorzugt ein Beutel aus Kunststoff. Die Befüll- und/oder Entleerungseinrichtung 3 kann beispielsweise eine Abfülleinrichtung für flüssige oder pulverförmige Produkte insbesondere für Getränke in der Lebensmittelindustrie, eine Zapfeinrichtung für flüssige oder pulverförmige Produkte, beispielsweise eine Zapfhahn, eine Probenahmeeinrichtung zum Entnehmen von Proben flüssiger oder pulverförmiger Stoffe oder dergleichen sein.

Sowohl der Behälter 2 als auch die Befüll- und/oder Entleerungseinrichtung 3 sind jeweils mit einem Spund oder Stutzen 4 bzw. 5 versehen, durch die sich ein produktführender

Durchlasskanal 6 erstreckt, wobei ein erster Kanalabschnitt 6a dem Stutzen 4 des Behälters 2 und ein zweiter Kanalabschnitt 6b dem Stutzen 5 der Befüll- und/oder Entleerungseinrichtung 3 zugeordnet ist. Beide Abschnitte 6a, 6b weisen im Wesentlichen den gleichen Innendurchmesser auf und sind rohrförmig mit einer Mittellinie 6' ausgebildet.

Der Spund oder Stutzen 4 enthält einen Flansch 4a zum Befestigen am Behälter 2. Der Flansch 4a ist bevorzugt an der Innenseite des Behälters 2 rund um eine Öffnung festgeschweißt.

Der Spund oder Stutzen 5 ist entweder Teil einer produktführenden Leitung oder steht mit einer produktführenden Leitung oder einem sonstigen, produktführenden Hohlraum in Fließverbindung.

Die beiden Stutzen 4, 5 und der Beutel 2 sind bevorzugt aus Kunststoff gefertigt, wobei PP (Polypropylen) wegen seiner Hochtemperaturstabilität besonders geeignet ist, im Gegensatz zum bisher verwendeten PE (Polyethylen), das nur kurzzeitig bis 100°C belastbar ist..

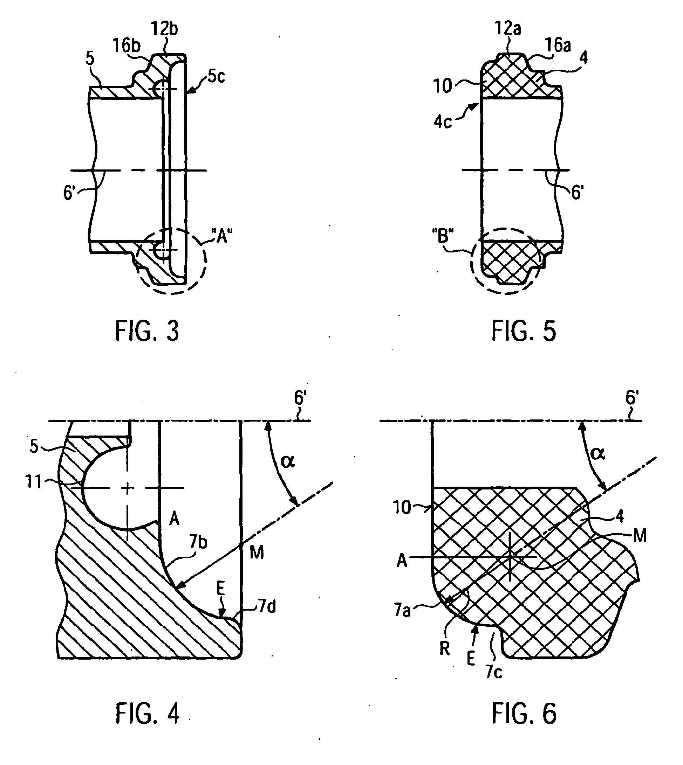

Wie auch aus den Fig. 2 bis 6 zu sehen, enthält jeder Stutzen 4, 5 einen wesentlichen rohrförmigen Abschnitt 4b bzw. 5b, die in Axialrichtung beliebig lang sein bzw. ggf. auch fehlen können. Jeder Stutzen 4, 5 endet an seinem freien Ende mit jeweils einer Stirnfläche 4c, 5c.

Zwischen den Stutzen 4 und 5 sind selbstzentrierende Passelemente 7 vorgesehen. Die Passelemente 7 enthalten eine erste, ausgeformte Anlagefläche 7a an einem der Stutzen 4 und eine zweite, korrespondierend ausgeformte Anlagefläche 7b am anderen Stutzen 5. Die Anlageflächen 7a, 7b sind korrespondierend, d. h. mit übereinstimmender, jedoch positiv oder negativ ausgebildeten Form, ausgerundet und derart angeordnet, dass sich eine in Richtung auf die Mittellinie 6' gerichtete Zwangsbewegung ergibt, sollten die beiden Stutzen 4, 5 in einer Stellung gegeneinander gedrückt werden, in der die Kanalabschnitte 6a, 6b nicht fluchtend zueinander ausgerichtet sind.

Die Anlageflächen 7a, 7b enthalten einen Kreisabschnitt, da dieser sehr einfach in korrespondierender positiver und negativer Ausbildung herstellbar ist. Die Ausrundung kann jedoch auch eine andere Form aufweisen. Dabei ist die Form bevorzugt so gewählt, dass bei einem versehentlichen Zusammenpressen mit größerer Kraft keine reibungsbedingte Klemmung zwischen den Anlageflächen auftritt. Bevorzugt sind die kreisabschnittförmigen Anlageflächen 7a, 7b mit einem gemeinsamen Radius R um einen Mittelpunkt M gerundet, der zwischen dem radial außeren Ende E jeder Anlägefläche 7a, 7b aber radial außerhalb des inneren Endes A der Antagefläche 7a, 7b, liegt. Bevorzugt ist der Mittelpunkt M so gelegt, dass ein Radius R, der den Mittelpunkt M und die Mitte der kreisabschnittförmigen Anlagefläche 7a, 7b verbindet, mit der Längsmittellinie 6' einen Winkel α einschließt, der gröβer als 0°, jedoch kleiner als 90° ist, und bevorzugt zwischen 20° und 80° liegt. Die Länge der Anlagefläche 7a, 7b entlang der Krümmung liegt zwischen einem Viertel- und einem Achtel-Kreis. Die Anlageflächen 7a, 7b sind weiterhin so gelegt, dass der Anfangspunkt A jeder Anlagefläche 7a, 7b gleichzeitig der Punkt des geringsten Abstandes zur Mittellinie 6' und der Endpunkt E der Anlagefläche 7a, 7b den größten Abstand zur Längsmittellinie 6' aufweist. An den Endpunkt E schließt sich jeweils eine im Wesentlichen axial verlaufende Erstreckungsfläche 7c bzw. 7d an, die wiederum korrespondierend zueinander ausgebildet und mit einem kleineren Krümmungsradius als die Anlageflächen gekrümmt oder abgeschrägt sind. Die Erstreckungsflächen 7c, 7d sind als Einlaufstrecken ausgebildet und bilden die radial innenliegende Begrenzung eines sich im Wesentlichen axial erstreckenden Steges und einer korrespondierenden Ausnehmung.

Radial innerhalb der Passelemente 7, d. h. zwischen den Passelementen 7 und dem Druchflusskanal 6, ist eine Dichteinrichtung 8 vorgesehen. Die Dichteinrichtung 8 enthält im dargestellten Ausführungsbeispiel einen O-Ring 9 an einem der Stutzen und eine Dichtfläche 10 am anderen Stutzen. Zur Aufnahme des O-Rings ist eine Vertiefung 11 vorgesehen, die an die Form des O-Rings angepasst ist, diesen jedoch nur um etwa die Hälfte bis 2/3 seines Umfangs umschließt, so dass der aus der Vertiefung 11 vorstehende Teil des Dichtrings 9 an die Dichtfläche 10 angepresst und dadurch verformt werden kann.

Sowohl die Vertiefung 11, als die Dichtfläche 10 als auch die Passelemente 7 verlaufen im Kreis um die Mittellinie 6' herum. Dadurch ergibt sich an einem der Stutzen 4 ein ausgerundeter Vorsprung, der durch die Anlagefläche 7a und die im Wesentlichen radial zur Längsachse 6' verlaufende Dichtfläche 10 gebildet ist. Am anderen Stutzen 5 befindet sich eine im Wesentlichen trichterförmige Vertiefung, die durch die Anlagefläche 7b gebildet ist. Treffen nun der Vorsprung und die Vertiefung aufeinander, so gleiten die Anlagefläche 7a, 7b bzw. die Erstreckungsfläche 7c, 7b solange aufeinander, bis die Anlagefläche 7a, 7b vollflächig aufeinander liegen und die beiden Kanalanschnitte 6a, 6b entlang der gemeinsamen Längsmittellinie 6' fluchtend zueinander ausgerichtet sind.

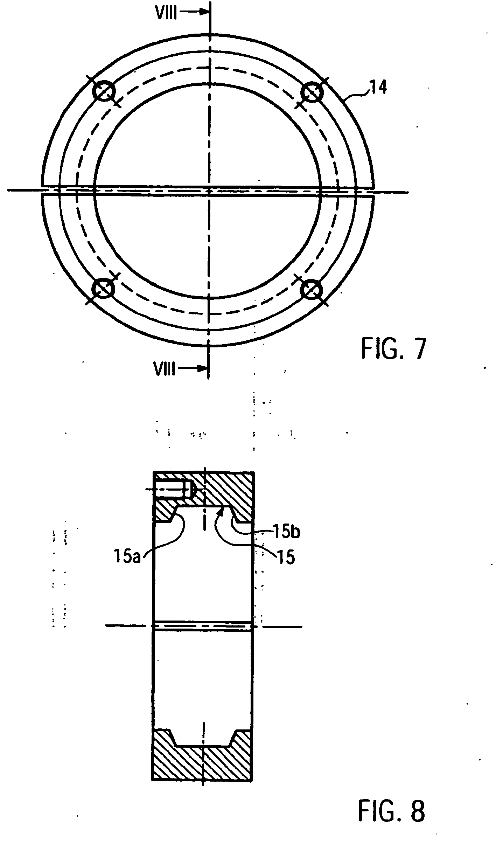

Die Passelemente 7 und die Dichteinrichtung 8 sind an den Stimflächen 4c, 5c der Stutzen 4, 5 vorgesehen, die sich radial über den jeweiligen rohrförmigen Abschnitte 4b, 5b hinauserstrecken und die Grenzfläche zwischen zwei Stegabschnitten 12a und 12b bilden, die zu einen gemeinsamen Steg 12 zusammengefügt werden, wenn sie mit ihren Passelementen 7 korrekt aufeinander liegen. Der Steg 12 ist Teil einer Verbindungseinrichtung 13, mit dem die beiden Stutzen 4, 5 für eine Durchflussverbindung durch den Kanal 6 miteinander zu verbinden sind. Zu diesem Zweck ist eine Klemmeinrichtung 14 in Form eines geteilten Klemmrings (Fig. 7 und 8) vorgesehen, der an seiner Innenseite eine Ausnehmung 15 aufweist, die sich radial nach außen erstreckt und schräg verlaufende Klemmflächen 15a, 15b enthält, die korrespondierende Schrägflächen 16a, 16b am Steg 12 übergreifen. Die Breite der Ausnehmung 15 und des Steges 12 in Axialrichtung bzgl. der Längsmittellinie 6' ist so abgestimmt, dass die Ausnehmung 15 und Steg 12 nur über die Schrägflächen 15a, 15b, 16a und 16b miteinander in Kontakt stehen. Auf diese Weise wird sichergestellt, dass auch bei geringfügigen Maßabweichungen die Stegabschnitte 12a, 12b mit ihren Stimflächen 4c, 5c in festen Kontakt miteinander gedrückt werden, so dass der O-Ring 8 an der Dichtfläche 10 unter Verformung abdichtend anliegt. Die Verformung des O-Rings wird dadurch ermöglicht, dass die Stimflächen 4c, 5c im Bereich der Dichteinrichtung 8 zueinander einen Abstand aufweisen, wenn die Passelemente 7 aneinander anliegen.

Zum Andocken des Behälters 2 an der Befüll- und/oder Entleerungseinrichtung 3 werden die Stutzen 4, 5 gegeneinander geführt, bis die Passelemente 7 die korrekte Position der Stutzen 4, 5 mit fluchtend ausgerichteter Mittellinie 6' erzwungen haben. Dann werde die beiden Hälften der Klemmeinrichtung 13 auf den Steg 12 gesetzt und in Radialrichtung soweit fixiert, dass der fluchtend ausgerichtete und abgedichtete Zustand der beiden Stutzen 4, 5 zumindest während des Befüll- und/oder Entleerungsvorgangs fixiert wird. Da die Grenzfläche zwischen den beiden Stegabschnitten 12a, 12b nicht geradlinig und nicht radial verläuft, wird eine weitere Dichtwirkung durch eine Art Labyrinthdichtung erzielt.

Der Beutel 2 enthält weiterhin einen Stopfen 17, mit dem die Innenöffnung 6a des Beutelstutzens 4 verschlossen werden kann. Der Stopfen 17 ist an der dem Beutelstutzen 4 gegenüberliegenden Wandung 2a des Beutels 2 befestigt, bevorzugt angeschweißt. Der Stopfen 17 besteht bevorzugt aus dem gleichen Material wie der Stutzen 4. Der Stopfen 17 kann jede bekannte Konstruktion aufweisen, die mit dem gewählten Stutzen 4 zusammenpasst.

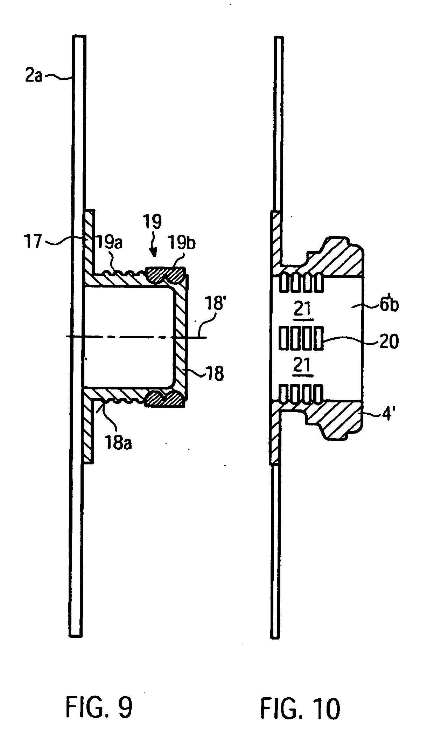

Der Stopfen 17 ist jedoch, wie Fig. 9 zeigt, bevorzugt mit wenigstens einem Dichtelement 19 an der zylindrischen Außenfläche 18a des Zylinderteils 18 versehen. Im dargestellten Ausführungsbeispiel sind zwei entlang der Mittelachse 18' des Zylinderteils 18 hintereinander liegende Dichtelemente 19a und 19b vorgesehen. Das der Beutelwandung 2a am nächsten liegende Dichtelement 19c besteht aus wenigstens zwei, bevorzugt vier Wellungen mit dazwischen liegenden Wellentälern, die in Umfangsrichtung in das Material des Zylinderteils 18 so eingeformt sind, dass die Wellenberge elastisch verformbar sind. Dies kann durch eine entsprechende geringe Bemaßung der Wellen oder durch Materialeigenschaften bewirkt werden. Das zweite, in Axialrichtung entfernter von der Beutelwand 2a angeordnete Dichtelement 19b enthält eine ringförmige Dichtung, die am Zylinderteil 18 angeformt ist. Das zweite Dichtelement 19b besteht dabei bevorzugt aus einem weicheren und/oder elastischeren Material als das Material des Zylinderteils 18. Das Anformen des zweiten Dichtelements 19b erfolgt bevorzugt durch das 2K-Verfahren (2-Komponenten-Spritzgießverfahren), das sich besonders für Spritzgießteile mit Hart-/Weich-Komponenten eignet.

Der in Fig. 9 gezeigte Stopfen kann zum Verschließen aller Beutelstutzen eingesetzt werden, auch wenn diese nicht die oben beschriebenen selbstzentrierenden Passelemente zeigen. Der Stopfen sollte jedoch bevorzugt, wie anhand des Stopfens 4' der Fig. 10 gezeigt, ebenfalls mit wenigstens einem Dichtelement 20 versehen sein. Im dargestellten Ausführungsbeispiel enthält das Dichtelement 20 eine Vielzahl von Rippen, die komplementär zu den ringförmigen Rippen oder Wellungen des ersten Dichtelementes 19a des Stopfens 17 ausgebildet sind. Bevorzugt erstrecken sich die Rippen des Dichtelementes 20 des Stopfens 4' nicht über den gesamten Innenumfang der Innenöffnung 6'b des Stopfens 4', sondem sind in Umfangsrichtung durch glatte Flächen 21 unterbrochen. Dagegen erstrecken sich die Wellungen bzw. mit Abstand nebeneinander liegende Rippen des ersten Dichtelementes 19a des Stopfens 70 bevorzugt über den gesamten Außenumfang des zylindrischen Teils 18 herum.

Beim Zusammenfügen von Stopfen 17 und Stutzen 4' dient das zweite Dichtelement 19b, das zuerst in die Innenöffnung 6'b des Stutzens 4' eintaucht, dazu, eventuell anhaftendes Produkt aus der Innenöffnung 6' abzustreifen und nach außen, d. h. in Fig. 10 nach rechts zu befördern. Die Wellungen bzw. Rippen des ersten Dichtelementes 19a und des Dichtelementes 20 werden beim Einschieben des Stopfens 17 elastisch deformiert und rasten dann, Rippe in Wellental, abdichtend ineinander. Durch die Ausbildung als Wellung bzw. Rippung kann die Höhe der zu verformenden Bereiche begrenzt werden, so dass kaum mit Verschleiß zu rechnen ist. Anders als bei den üblichen Sagezahnprofilen oder bei gezackten Krallenbefestigungen wird auch das Öffnen erleichtert. Durch das Anspritzen des zweiten Dichtelements 19b wird verhindert, dass das Produkt das zweite Dichtelement hinterwandert, beispielsweise an der Verbindung zwischen dem Zylinderteil 18 und dem zweiten Dichtelement 19b.

In Abwandlung des beschriebenen und gezeichneten Ausführungsbeispiels können die . Passelemente auch eine andere Form aufweisen, die eine selbstzentrierende Funktion zulässt, jedoch bevorzugt nicht klemmt. Eine derartige Ausformung kann beispielsweise durch gerade Anlageflächen unter einem nicht hemmenden Winkel, durch ovale oder durch irregulär gerundete Anlageflächen erzielt werden. Die Dichteinrichtung kann einen anderen Dichtring oder andere Dichtungen enthalten. Die Passelemente können vertauscht werden, so dass der Vorsprung an der Befüll- und/oder Entleerungseinrichtung und die Vertiefung am Beutel angeordnet sind. Statt des geteilten Rings kann eine andere Klemmeinrichtung vorgesehen sein. Schließlich kann der Dichtring statt am Stopfen im Stutzen vorgesehen sein.

## Patentansprüche

1. Anordnung mit einer Andockeinrichtung (1) und einem Beutel zum Verbinden des Beutels (2) mit einer Befüll- und/oder Entleerungseinrichtung (3), die einen ersten Stutzen (4) mit einer Innenöffnung (6a) am Beutel (2) und einen zweiten Stutzen (5) mit einer Innenöffnung (6b) an der Befüll- und/oder Entleerungseinrichtung (3) enthält, **dadurch gekennzeichnet, dass** die Innenöffnung (6a) des Beutels (2) durch einen Stopfen (17) verschließbar ist der mit wenigstens einem angeformten Dichtelement (19) mit Wellenprofil versehen ist und die Innenöffnung (6a) wenigstens ein korrespondierendes, angeformtes Dichtelement (20) mit Wellenprofil aufweist.

2. Anordnung nach Anspruch 1, **dadurch gekennzeichnet, dass** der erste und der zweite Stutzen (4, 5) mit selbstzentrierenden Passelemente (7) versehen sind, die korrespondierend ausgeformte, bevorzugt gerundete, Anlageflächen (7a, 7b) an beiden Stutzen (4, 5) aufweisen, die im Wesentlichen in Axialrichtung weisen.

3. Anordnung nach Anspruch 2, **dadurch gekennzeichnet, dass** die Anlageflächen (7a, 7b) jeweils einen Kreisabschnitt um einen Krümmungsmittelpunkt (M) enthalten.

4. Anordnung nach Anspruch 3, **dadurch gekennzeichnet, dass** eine Verbindungslinie (R) zwischen dem Krümmungsmittelpunkt (M) und der Mitte der gekrümmten Anlagefläche (7a, 7b) unter einem Winkel (a) zur Achse des Stutzens (4, 5) verläuft, der größer als 0° und kleiner als 90° ist.

5. Anordnung nach einem der Ansprüche 2 bis 4, **dadurch gekennzeichnet, dass** die Passelemente (7) an einer Stirnfläche (4c, 5c) außerhalb der Innenöffnung (6) angeordnet sind.

6. Anordnung nach einem der Ansprüche 2 bis 5, **dadurch gekennzeichnet, dass** einer der Stutzen (4) an einer Stirnfläche (4c) außerhalb der Innenöffnung (6) mit einem positiv gerundeten Passvorsprung und der andere Stutzen (5) außerhalb der Innenöffnung (6) mit einer negativ gerundeten Passvertiefung versehen ist.

7. Anordnung nach einem der Ansprüche 2 bis 6, **dadurch gekennzeichnet, dass** die Passelemente (7) von der Innenöffnung (6) durch eine Dichteinrichtung (8) getrennt sind.

8. Anordnung nach Anspruch 7, **dadurch gekennzeichnet, dass** die Dichteinrichtung (8) eine Vertiefung (11) an einem Stutzen (4, 5) zur Aufnahme eines O-Rings (9) und eine Dichtfläche (10) am anderen Stutzen (5, 4) zur Anlage an den O-Ring (9) enthält.

9. Anordnung nach einem der Ansprüche 2 bis 8, **dadurch gekennzeichnet, dass** eine Verbindungseinrichtung (13) zum Verbinden der Stutzen (4, 5) unter Anpressen der Passelemente (7) vorgesehen ist.

10. Anordnung nach Anspruch 9, **dadurch gekennzeichnet, dass** die Verbindungseinrichtung (13) wenigstens einen ersten dem ersten Stutzen (4, 5) zugeordneten Stegabschnitt (12a, 12b) und wenigstens einen zweiten dem zweiten Stutzen (5, 4) zugeordneten Stegabschnitt (12b, 12a) enthält, die durch eine Klemmeinrichtung (14) zusammengehalten werden.

11. Anordnung nach Anspruch 10, **dadurch gekennzeichnet, dass** die Stegabschnitte (12a, 12b) über eine nicht geradlinig verlaufende Grenzfläche aneinander anliegen.

12. Anordnung nach Anspruch 11, **dadurch gekennzeichnet, dass** die Grenzfläche mit den Passelementen (7) versehen ist.

13. Anordnung nach einem der Ansprüche 1 bis 12, **dadurch gekennzeichnet, dass** das Dichtelement (19) einen angeformten Dichtring (19b) aufweist.

14. Behälter (2), insbesondere Beutel, mit einem Stutzen (4) mit Innenöffnung (6) und einer Anordnung nach einem der Ansprüche 1 bis 13.

15. Befüll- und/oder Entleerungseinrichtung (3), für einen Beutel (2), mit einem Stutzen (5) mit Innenöffnung (6) und einer Anordnung nach einem der Ansprüche 1 bis 13.

## Claims

1. Arrangement with a docking unit (1) and a bag for connecting the bag (2) to a filling and/or emptying unit (3) comprising a first connector fitting (4) with an inner opening (6a) on the bag (2) and a second connector fitting (5) with an inner opening (6b) on the filling and/or emptying unit (3), **characterised in that** the inner opening (6a) of the bag (2) can be closed by means of a stopper (17) which is provided with at least one seal element (19) with a corrugated profile moulded onto it, and the inner opening (6a) has at least one matching seal element (20) with a corrugated profile moulded onto it.

2. Arrangement as claimed in claim 1, **characterised in that** the first and the second connector fitting (4, 5) are provided with self-centring locating elements (7), which have matching shaped, preferably rounded, contact surfaces (7a, 7b) on both connector fittings (4, 5) essentially pointing in the axial direction.

3. Arrangement as claimed in claim 2, **characterised in that** the contact surfaces (7a, 7b) each comprise a circle segment around a mid-point of curvature (M).

4. Arrangement as claimed in claim 3, **characterised in that** a connecting line (R) between the mid-point of curvature (M) and the centre of the curved contact surface (7a, 7b) subtends an angle (α) with the axis of the connector fitting (4, 5) that is greater than 0° and smaller than 90°.

5. Arrangement as claimed in one of claims 2 to 4, **characterised in that** the locating elements (7) are disposed on an end face (4c, 5c) outside the inner opening (6) .

6. Arrangement as claimed in one of claims 2 to 5, **characterised in that** one of the connector fittings (4) is provided with a positively rounded locating projection on an end face (4c) outside the inner opening (6) and the other connector fitting (5) is provided with a negatively rounded locating recess outside the inner opening (6).

7. Arrangement as claimed in one of claims 2 to 6, **characterised in that** the locating elements (7) are separated from the inner opening (6) by a sealing device (8).

8. Arrangement as claimed in claim 7, **characterised in that** the sealing device (8) comprises a recess (11) on one connector fitting (4, 5) for accommodating an 0-ring (9) and a seal surface (10) on the other connector fitting (5, 4) which sits in contact with the O-ring (9).

9. Arrangement as claimed in one of claims 2 to 8, **characterised in that** a connecting device (13) is provided for connecting the connector fittings (4, 5) when the locating elements (7) are pressed together.

10. Arrangement as claimed in claim 9, **characterised in that** the connecting device (13) comprises at least a first web portion (12a, 12b) co-operating with the first connector fitting (4, 5) and at least a second web portion (12a, 12b) co-operating with the second connector fitting (5, 4) which are held together by means of a clamping device (14).

11. Arrangement as claimed in claim 10, **characterised in that** the web portions (12a, 12b) lie against one another along a boundary surface that does not extend in a straight line.

12. Arrangement as claimed in claim 11, **characterised in that** the boundary surface is provided with the locating elements (7).

13. Arrangement as claimed in one of claims 1 to 12, **characterised in that** the seal element (19) has a sealing ring (19b) moulded onto it.

14. Container (2), in particular a bag, with a connector fitting (4) with an inner opening (6) and an arrangement as claimed in one of claims 1 to 13.

15. Filling and/or emptying unit (3) for a bag (2) with a connector fitting (5) with an inner opening (6) and an arrangement as claimed in one of claims 1 to 13.

## Revendications

1. Dispositif avec un mécanisme d'accouplement (1) et un sachet, pour relier le sachet (2) à un dispositif de remplissage et/ou de déversement (3) qui contient un premier embout (4) avec une ouverture intérieure (6a) au niveau du sachet (2) et un second embout (5) avec une ouverture intérieure (6) au niveau du dispositif de remplissage et/ou de déversement (3), **caractérisé en ce que** l'ouverture intérieure (6a) du sachet (2) est apte à être fermée par un bouchon (17) qui est pourvu d'au moins un élément d'étanchéité rapporté (19) présentant un profil ondulé, et l'ouverture intérieure (6a) présente au moins un élément d'étanchéité rapporté correspondant (20) à profil ondulé.

2. Dispositif selon la revendication 1, **caractérisé en ce que** les premier et second embouts (4, 5) sont pourvus d'éléments d'ajustage autocentreurs (7) présentant sur les deux embouts (4, 5) des surfaces d'application (7a, 7b) de formes correspondantes, de préférence arrondies, qui sont dirigées globalement dans le sens axial.

3. Dispositif selon la revendication 2, **caractérisé en ce que** les surfaces d'application (7a, 7b) contiennent chacune un segment de cercle autour d'un centre de courbure (M).

4. Dispositif selon la revendication 3, **caractérisé en ce qu'**une ligne de liaison (R) entre le centre de courbure (M) et le centre de la surface d'application courbe (7a, 7b) s'étend par rapport à l'axe de l'embout (4, 5) suivant un angle (α) qui est supérieur à 0° et inférieur à 90°.

5. Dispositif selon l'une des revendications 2 à 4, **caractérisé en ce que** les éléments d'ajustage (7) sont disposés sur une surface frontale (4c, 5c) à l'extérieur de l'ouverture intérieure (6).

6. Dispositif selon l'une des revendications 2 à 5, **caractérisé en ce que** l'un des embouts (4) sur une surface frontale (4c) à l'extérieur de l'ouverture intérieure (6) est pourvu d'une saillie d'ajustage arrondie positivement, et l'autre embout (5) à l'extérieur de l'ouverture intérieure (6) est pourvu d'un creux d'ajustage arrondi négativement.

7. Dispositif selon l'une des revendications 2 à 6, **caractérisé en ce que** les éléments d'ajustage (7) sont séparés de l'ouverture intérieure (6) par un dispositif d'étanchéité (8).

8. Dispositif selon la revendication 7, **caractérisé en ce que** le dispositif d'étanchéité (8) présente sur un embout (4, 5) un creux (11) destiné à recevoir un joint torique (9), et sur l'autre embout (5, 4) une surface d'étanchéité (10) destinée à être appliquée contre le joint torique (9).

9. Dispositif selon l'une des revendications 2 à 8, **caractérisé en ce qu'**il est prévu un mécanisme de liaison (13) pour relier les embouts (4, 5) en pressant les éléments d'ajustage (7).

10. Dispositif selon la revendication 9, **caractérisé en ce que** le mécanisme de liaison (13) contient au moins une première partie formant rebord (12a, 12b) associée au premier embout (4, 5) et au moins une seconde partie formant rebord (12b, 12a) associée au second embout (5, 4), qui sont réunies par un mécanisme de serrage (14).

11. Dispositif selon la revendication 10, **caractérisé en ce que** les parties formant rebords (12a, 12b) sont appliquées l'une contre l'autre par l'intermédiaire d'une interface non rectiligne.

12. Dispositif selon la revendication 11, **caractérisé en ce que** l'interface est pourvue des éléments d'ajustage (7).

13. Dispositif selon l'une des revendications 1 à 12, **caractérisé en ce que** l'élément d'étanchéité (19) présente une bague d'étanchéité rapportée (19b).

14. Contenant (2), en particulier sachet, avec un embout (4) pourvu d'une ouverture intérieure (6) et un dispositif selon l'une des revendications 1 à 13.

15. Dispositif de remplissage et/ou de déversement (3) pour un sachet (2), avec un embout (5) pourvu d'une ouverture intérieure (6) et un dispositif selon l'une des revendications 1 à 13.
